**Europäisches Patentamt**

**European Patent Office**

**Office européen des brevets**

(19)

(11) Veröffentlichungsnummer : **0 154 926
B1**

(12) **EUROPÄISCHE PATENTSCHRIFT**

(45) Veröffentlichungstag der Patentschrift :
02.03.88

(51) Int. Cl.⁴ : **F 16 L 33/00, F 16 L 33/24**

(21) Anmeldenummer : **85102459.6**

(22) Anmeldetag : **05.03.85**

(54) **Verfahren zur Herstellung eines Steckanschlusses für Schläuche.**

(30) Priorität : **10.03.84 DE 3408816**

(43) Veröffentlichungstag der Anmeldung :
**18.09.85 Patentblatt 85/38**

(45) Bekanntmachung des Hinweises auf die Patenterteilung : **02.03.88 Patentblatt 88/09**

(84) Benannte Vertragsstaaten :
**AT BE CH FR GB IT LI LU NL SE**

(56) Entgegenhaltungen :
**FR-A- 2 288 930
GB-A- 1 267 406
US-A- 3 897 090**

(73) Patentinhaber : **REHAU AG + Co
Rheniumhaus
D-8673 Rehau (DE)**

(72) Erfinder : **Der Erfinder hat auf seine Nennung verzichtet**

Jouve, 18, rue St-Denis, 75001 Paris, France

**Beschreibung**

Die Erfindung betrifft ein Verfahren zur Herstellung eines Steckanschlusses für Wellschläuche unter Verwendung einer der lichten Weite des Schlauches entsprechenden Stützhülse, welche in das anzuschließende Schlauchende eingeschoben wird, wobei die Stützhülse an ihrem, dem Schlauchende zugeordneten Endbereich einen über die lichte Weite des Schlauches vorstehenden Umfangsrand aufweist.

Steckverbindungen für Schläuche sind bekannt. So wird beispielsweise in der CH-A-589 245 eine Armatur für Schlauch- oder Rohrendabschnitte zum Herstellen einer Verbindung zwischen mindestens zwei Schläuchen oder Rohren beschrieben, welche einen Verbindungskörper mit je einem Anschlußstück zum Einführen in ein Ende des Schlauches oder Rohres aufweist. Die jeweiligen Anschlußstücke sind von einem Ring umschlossen, welcher eine zylindrische Form aufweist und mit einem einzigen Schlitz versehen ist, der sich von einem Rand der Zylinderfläche zum anderen erstreckt. Dieser Ring steht über eine Eingriffsmechanik mit dem Verbindungskörper in Verbindung und weist in seinem Schlitzbereich Klemmittel auf, über welche der Ring zusammendrückbar ist. Mit der Betätigung der Klemmittel wird der auf dem Anschlußstück angeordnete Schlauch- oder Rohrabschnitt verspannt, wodurch eine dichte Verbindung erzielbar ist.

Derartige Armaturen für die Herstellung von Schlauchverbindungen sind aufwendig in der Handhabung und kostenträchtig. Aufgrund ihrer mechanischen Wirkungsweise können — auf Dauer gesehen — Ermüdungserscheinungen im verklemmten Schlauchmaterial nicht ausgeschlossen werden.

Außerdem lassen sich auf diese Weise nur glattwandige Schläuche sicher verbinden, während gewellte Schläuche mit dieser Verbindungsart nicht versehen werden können.

Es sind spiralgewellte Schläuche bekannt, welche aus einem extrudierten Grundprofil bestehen, das in einem speziellen Arbeitsgang über die Flanken zu einem Schlauch gewickelt und dabei an den Flanken verklebt bzw. geschweißt wird. Das Grundprofil kann dabei so gestaltet sein, daß der später gewickelte Schlauch im Innendurchmesser praktisch glatt ausgeführt ist und im Außendurchmesser einer groben Wendel mit großen Zwischenräumen entspricht. Solche Schläuche werden beispielsweise als Ablaufschläuche für Waschmaschinen, Geschirrspülmaschinen, Trockengeräte usw. eingesetzt.

Bei diesen Schläuchen werden Verbindungen durch Anspritzen einer Verbindungsmuffe aus weichem Kunststoffmaterial hergestellt. Dies ist deshalb unproblematisch, weil durch die spezielle Ausgestaltung des extrudierten Grundprofils, welche zu der glatten Innenwand führt, sich der gewickelte Schlauch längsstabil verhält, also beim Anspritzvorgang der Muffenverbindung nicht zusammengedrückt werden kann. Darüber hinaus wird durch die großen Zwischenräume am Außenumfang des Schlauches gute mechanische Verankerung des angespritzten Muffenmaterials erzielt.

Dieses Verfahren des Anspritzens von muffenartigen Verbindungsstücken an spiralgewickelte Wellschläuche ist nicht anwendbar bei flexiblen, insbesondere dünnwandigen Wellschläuchen, welche umlaufend geschlossene Wellen aufweisen. Bei derartigen Schläuchen sind die Einzelwellungen sowohl im inneren als auch im äußeren Schlauchbereich im Abstand voneinander gehalten.

Dadurch ergibt sich eine besondere Flexibilität dieser Schläuche, die als nachteilig bewirkt, daß die Schlauchwandung dem Einspritzdruck beim Anspritzen eines muffenartigen Verbindungsstückes nicht standhält.

Experimente haben gezeigt, daß solche Schläuche mit umlaufend geschlossenen Wellen, welche in unendlichen Längen im Wege der Extrusion und anschließender Formgebung durch eine mit umlaufenden Kettengliedern versehene Wellmaschine hergestellt werden, beim Anspritzen eines muffenartigen Verbindungsstückes im Bereich der Anspritzung undefiniert verformt werden.

Der Spritzdruck beim Anspritzen des Verbindungsstückes ist so groß, daß die Wellungen flachgedrückt werden, was wiederum den Nachteil hat, daß die Haftung des muffenartigen Verbindungsstückes auf dem Ende des Wellschlauches verringert wird. Außerdem liegt das durch den Spritzdruck verformte Wellrohrende undefiniert im Querschnitt der angespritzten Muffen, so daß auch die Haftfestigkeit der Muffe auf dem Wellrohr undefiniert ist.

Aus dem DE-U-1 750 254 ist ein leicht lösbarer Steckanschluß, beispielsweise für Staubsaugerschläuche bekannt geworden. Bei dem beschriebenen Schlauch handelt es sich ebenfalls um ein spiralgewelltes Schlauchstück, welches zur Verstärkung im Steckbereich eine konisch ausgebildete Hülse aufweist, die aus Flexibilitätsgründen mit Schlitzen versehen ist und in das anzuschließende Schlauchende eingeschoben wird. Diese Hülse kann nach Belieben in das Schlauchinnere eingesteckt oder von außen über den Schlauchumfang im Bereich des Schlauchanschlusses geschoben werden. Die Hülse weist einen gebördelten Rand auf, welche ihren Endsitz im oder auf dem Schlauch festlegt. Die Schlitze der Hülse sollen eine gewisse Federung bewirken, was beim Einstecken bzw. Überschieben dienlich sein kann.

Der mit dem Anschluß versehene Schlauch kann dann leicht abnehmbar auf ein Rohr aufgesteckt werden, wo er ausreichend festsitzt.

Der Nachteil dieser Verbindungsart ist darin zu sehen, daß hier eine relativ leicht lösbare Verbindung geschaffen worden ist, welche für den gedachten Anwendungszweck als Staubsaugerschlauchverbindung, Verbindung von Belüftungsschläuchen usw. ausreichend sein kann. Für solche Anwendungsfälle, wo mit Wasser gearbeitet wird, ist diese Verbindungsart nicht brauchbar.

Hier setzt die Erfindung ein, die es sich zur Aufgabe gestellt hat, die Nachteile des bekannten Standes der Technik zu vermeiden und einen Steckanschluß sowie das Verfahren zu seiner Herstellung anzugeben, welcher die Flexibilitätsvorteile eines dünnwandigen Schlauches mit umlaufend geschlossenen Wellen mit den Vorteilen einer aus weichem Kunststoffmaterial angespritzten, fest verankerten Verbindungsmuffe vereinigt. Erfindungsgemäß wird dazu Vorgeschlagen, daß eine mit äußeren Umfangsrippen versehene Stützhülse verwendet wird, welche in ihrer Länge auf den Einführungsabschnitt eines Innendornes aufgeschoben und in dieser Stellung in ihren Endsitz in dem abzustützenden Schlauchende gebracht wird, daß danach durch Zufahren einer teilbaren Außenform zwischen dem abgestützten Schlauchende, dem aus der Stützhülse herausragenden Kopfbereich des Innendorns und den zugeordneten Teilen der Außenform ein umlaufender, die Form einer Ringmuffe bildender, geschlossener Aufnahmeraum geschaffen wird, und daß anschließend der Aufnahmeraum unter Beibehaltung der Wellungen des gewellten Schlauchendes bis auf den Grund der Wellentäler mit einem Kunststoffmaterial ausgespritzt wird.

Wesentliches Merkmal des erfindungsgemäßen Verfahrens ist die Tatsache, daß über die Stützhülse die Wellungen des gewellten Schlauchendes beibehalten werden, und daß auch durch den Spritzdruck des für die Herstellung des Verbindungsschnittes erforderlichen Kunststoffmaterials die Figuration der Wellungen nicht beeinträchtigt wird.

Die Stützhülse kann im Einschubbereich geschlossen oder mit axialen Schlitzen versehen sein und besitzt an ihrem, dem Schlauchende zugeordneten Endbereich einen über die lichte Weite des Schlauches vorstehenden Umfangsrand. Der Umfangsrand kann in definiertem Winkel von der Stützhülse abstehen, derart, daß er nach dem Einspritzvorgang des Kunststoffmaterials in den Formhohlraum in das die Ringmuffe bildende Kunststoffmaterial eingebettet ist.

Der Vorteil des erfindungsgemäßen Verfahrens wird darin gesehen, daß dünnwandige, flexible Wellschläuche mit umlaufend geschlossenen Wellen nunmehr ebenfalls mit angespritzten Verbindungsmuffen versehen werden können, ohne daß durch den auftretenden Spritzdruck die Wellung des Schlauches im Bereich der Verbindung negativ beeinträchtigt würde. Dies wird dadurch erzielt, daß die einzelnen Wellungen des Schlauches im Endbereich, der gleichzeitig der Verbindungsbereich mit dem Kunststoffmaterial der Verbindungsmuffe ist, durch die Stützhülse derart abgestützt werden, daß die umlaufenden Wellungen auch während des Einspritzvorganges erhalten bleiben. Dies bewirkt, daß das eingespritzte Kunststoffmaterial in die äußeren Wellungen eindringen kann, wodurch die Oberfläche des Schlauches des, auf dem die Verbindungsmuffe haftet, wesentlich vergrößert wird. Dadurch wird auch die Haftwirkung verbessert. Das die Verbindungsmuffe bildende Kunststoffmaterial, welches in den Hohlraum eingespritzt wird, der durch die äußeren Werkzeughälften einerseits und den Innendorn, auf den die Stützhülse mit dem Schlauchende aufgeschoben ist, andererseits gebildet ist, kann erfindungsgemäß in die äußeren Wellungen des Schlauchendes eindringen und diese voll ausfüllen, ohne daß die Gefahr besteht, daß die Schlauchwellungen durch den Spritzdruck flachgelegt und somit undefiniert verformt werden.

Diese Gefahr ist deswegen groß, weil das in den Hohlraum eingespritzte Kunststoffmaterial eine Temperatur bis über 200 °C aufweisen kann, wodurch das dünnwandige Schlauchende erweicht wird und — wie zum Stand der Technik geschildert — die Rippen unkontrolliert verformt werden können. Dieser Nachteil verhindert die Verwendung der erfindungsgemäßen Stützhülse, welche mit ihren den Abständen der Schlauchwellungen entsprechenden Umfangsrippen eine unkontrollierte Verschiebung der Schlauchwellungen bei einsetzendem Spritzdruck und dabei erfolgender Durchwärmung des Schlauchendes verhindert.

Dieser Vorteil wird durch die steiler abfallenden Winkel der umlaufenden rippenartigen Erhöhungen erzielt, welche nach der Einführung der Stützhülse in das Schlauchende hinter die zugeordneten Wellungen des Schlauchendes halternd einrasten. Diese halternde Einrastung erfolgt im wesentlichen bei den abzustützenden Rippen, die dem Aufnahmeraum für das Kunststoffmaterial der Verbindungsmuffe gegenüber liegen. Die dem inneren Ende des Aufnahmeraumes für das einzuspritzende Kunststoffmaterial gegenüberliegende Umfangsrippe kann höher und/oder breiter gehalten sein als die anderen Umfangsrippen. Wegen der besonderen Druckverhältnisse am Ende des Formhohlraumes ist diese Maßnahme vorteilhaft, damit die dort befindliche Rippe des Schlauches nach beiden Seiten hin abgestützt ist. Die unterschiedliche Umfangsfiguration der zum inneren Ende der Stützhülse weisenden Umfangsrippen kann dadurch begründet werden, daß hier eine besondere Abdichtung gegenüber dem Einspritzraum des Kunststoffmaterials geschaffen werden soll. Diese Umfangsrippen an der Stützhülse werden in ihrer Abdichtwirkung durch Verankerungen in der Außenform unterstützt, welche wenigstens teilweise in die äußeren Rippen des Wellschlauches eingreifen. Diese Abstützungen des Wellschlauches außerhalb des Formhohlraumes sowohl von außen durch die umlaufenden Verankerungsfortsätze in der Außenform wie auch von innen durch die umlaufenden rippenartigen Erhöhungen der Stützhülse bewirken ein synchrones Abstützen der Schlauchwellungen in diesem Bereich und gleichzeitig eine Abdichtung gegen den Formhohlraum, die auch durch den Spritzdruck des einzuspritzenden Kunststoffmaterials nicht aufgehoben werden kann.

Der Ablauf des erfindungsgemäßen Verfahrens zur Anspritzung einer Verbindungsmuffe an Wellschläuche mit umlaufend geschlossenen Wellen wird kurz wie folgt beschrieben :

Zunächst wird die Stützhülse auf den Endbereich des Wellschlauches derart aufgeschoben, daß die rippenartigen Erhöhungen am Umfang der Stützhülse hinter den zugeordneten Wellen des Wellschlauchendes einrasten. Nachdem die rippenartigen Erhöhungen hinter den zugeordneten Schlauchwellungen eingerastet sind, ergibt sich eine entsprechende Verfestigung des Schlauchendes. Der Umfangsrand am vorderen Ende der Stützhülse steht in definiertem Winkel in Richtung zur äußeren Schlauchoberfläche ab und die letzte Schlauchwelle stützt sich an diesem Winkel ab. Als nächster Verfahrensschritt wird die Kombination aus Schlauchende und Stützhülse auf den Innendorn aufgeschoben. Der Innendorn liegt hierbei am inneren Umfang der Stützhülse an. Der nach vorn über den Umfangsrand der Stützhülse hinausstehende Teil des Innendornes begrenzt nach innen hin den Formhohlraum derart, daß der Umfangsrand der Stützhülse umlaufend nach drei Seiten frei in den Formhohlraum hineinragt, während die restlichen Oberflächen des Innendorns die innere Figuration der anzuspritzenden Verbindungsmuffe bilden. Sodann wird die Kombination Wellschlauch-Stützhülse-Innendorn in ein teilbares Werkzeug eingesetzt, welches anschließend geschlossen wird. Das teilbare Werkzeug bildet die Außenform des Formhohlraumes und begrenzt die anzuspritzende Verbindungsmuffe nach außen hin. Das Zusammenfahren der Aussenform ist derart erfolgt, daß der Formhohlraum nach vorn abgeschlossen worden ist, wobei lediglich eine Einspritzöffnung beibehalten wurde. Durch diese Einspritzöffnung wird Jetzt ein thermoplastisches Kunststoffmaterial, z. B. ein weich eingestelltes Kunststoffmaterial, eingespritzt. Dieses thermoplastische Kunststoffmaterial füllt den Formhohlraum derart, daß es aufgrund seiner thermoplastischen Eigenschaft in die äußeren Rippen des Wellschlauches eindringt und diese bis zum Grund füllt. Die Verankerung der inneren Wellungen an den umlaufenden rippenartigen Erhöhungen verhindert dabei ein Einfallen der Wellung des Wellschlauches. Mit dem Einspritzen des thermoplastischen Materials in den Formhohlraum wird auch der Umfangsrand der Stützhülse in seinem in den Formhohlraum hineinragenden Bereich voll umfänglich in das thermoplastische Material der Verbindungsmuffe eingebettet, wodurch die Stützhülse in ihrem Sitz am Einführungsende des Wellschlauches verankert wird.

Nach Beendigung des Einspritzvorganges und nach Durchlaufen einer Abkühlungsphase des eingespritzten thermoplastischen Materials wird die Außenform geöffnet, der Innendorn aus seinem Sitz herausgezogen und der Wellschlauch mit der angespritzten Verbindungsmuffe entnommen. Die Stützhülse bleibt hierbei in ihrem Paßsitz erhalten.

Nachzutragen bleibt noch, daß die Stützhülse sowohl in geschlitzter als auch in ungeschlitzter Form verwendet werden kann. Bei einer geschlitzten Stützhülse, wobei die Schlitzung am Umfang ein- oder mehrfach vorgenommen werden kann, wird die Einführung der Stützhülse in das Schlauchende erleichtert. Hier muß dann der Innendorn ein festes Anpressen der Stützhülse an die inneren Wellungen des Wellschlauches bewirken. In diesem Fall wird also das einrastende Festlegen der rippenartigen Erhöhungen am Umfang der Stützhülse im Endeffekt erst durch die Einführung des Innendornes bewirkt. Wird dagegen eine ungeschlitzte Stützhülse verwendet, kann diese in ihrem äußeren Grunddurchmesser der lichten Weite des Wellschlauches entsprechen. Die rippenartigen Erhöhungen am Umfang der Stützhülse überragen in diesem Fall die lichte Weite des Wellschlauches und müssen bei der Einführung gegen die Kraft der Innenwellungen in den Wellschlauch hineingeschoben werden. In diesem Fall wird schon dadurch die Hinterrastung der Innenwellungen des Wellschlauches durch die rippenartigen Erhöhungen am Umfang der Stützhülse bewirkt. Der Innendorn dient in diesem Fall nur der Abstützung der Kombination Wellschlauchende-Stützhülse während des Einspritzvorganges. In der Zeichnung sind Ausführungsbeispiele der erfindungsgemäßen Kombination Wellschlauch-Stützhülse-Innendorn-Außenform schematisch dargestellt ; es zeigt :

Fig. 1 eine solche Kombination im Schnitt mit einer geschlitzten Stützhülse

Fig. 2 a-c unterschiedliche Rippengestaltung

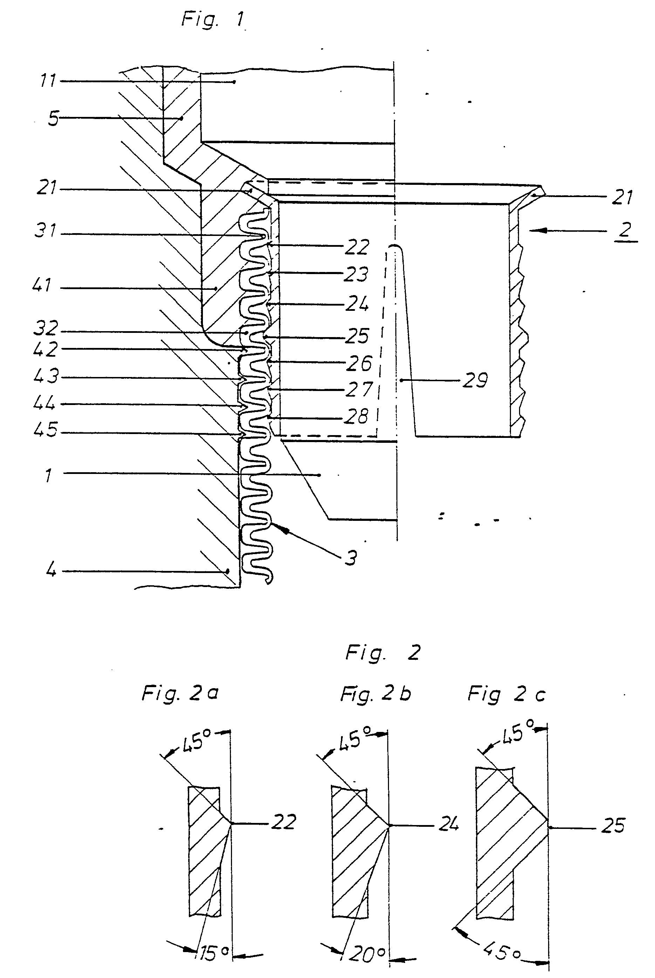

In Fig. 1 ist die Schnittdarstellung einer Kombination Innendorn 1, Stützhülse 2, Wellschlauch 3 und Außenform 4 dargestellt. Innendorn 1, Wellschlauch 3 und Außenform 4 sind lediglich im Halbschnitt abgebildet. Auf den Innendorn 1 ist die Stützhülse 2 aufgezogen, welche wiederum in der lichten Weite des Wellschlauches 3 angeordnet ist. Die Stützhülse 2 besitzt unterschiedliche rippenartige Erhöhungen, wobei die dem Umfangsrand 21 zugewandten rippenartigen Erhöhungen 22, 23 niedriger gehalten sein können als die übrigen rippenartigen Erhöhungen der Stützhülse. Die Höhe der rippenartigen Erhöhungen 22, 23 reicht aus, um die örtliche Fixierung jeder Welle 31 des Wellschlauches 3 zu gewährleisten. Bewirkt wird dies durch den Rastwinkel von 45°, welcher eine Blockierung der Welle in Einspritzrichtung des thermoplastischen Kunststoffmaterials bewirkt. Die rippenförmigen Erhöhungen 22, 23 weisen in Einschubrichtung einen flachen Winkel von vorzugsweise 15-20° auf, welcher das Einschieben gegen den Anpressdruck des Wellschlauches 3 erleichtert. Die nachfolgenden rippenartigen Erhöhungen 24, 25 an der Stützhülse 2 sind gegenüber den rippenartigen Erhöhungen 22, 23 geringfügig erhöht. Der Grund für diese Maßnahme ist darin zu sehen, daß gegen Ende des Formhohlraumes 41 die Abdichtwirkung erhöht werden muß. Dies bewirkt insbesondere die umlaufende rippenartige Erhöhung 25, die direkt gegenüber dem Ende des Formhohlraumes 41 angeordnet ist. Die rippenartigen Erhöhungen 26, 27, 28 sind außerhalb des Bereichs des Formhohlraumes 41 und damit direkt gegenüberliegend der Außenform 4 angeordnet. In diesem Bereich besitzt die Außenform 4 umlaufende Verankerungen 42, 43, 44, 45, welche in die Außenwellungen des Wellschlauches 3 eingreifen und in Kombination mit den rippenartigen Erhöhungen 26, 27, 28 der Stützhülse 2 eine derartige Abdichtwirkung entwickeln, daß ein Eindringen des thermoplastischen Materials beim Spritzvorgang hinter die Wellung 32 des Wellschlauches 3 verhindert wird.

Der Innendorn 1 begrenzt in seinem oberen Bereich 11 den Formhohlraum 41 nach innen hin, soweit er nicht bereits durch die Kombination Innendorn 1, Stützhülse 2 und Wellschlauch 3 nach innen hin abgegrenzt ist. Der Umfangsrand 21 der Stützhülse 2 ragt dabei nach drei Seiten frei in den Formhohlraum 41 auf. Der Formhohlraum 41 wird in den Konturen der anzuformenden Verbindungsmuffe 5 nach außen hin von der Außenform 4 umfaßt. Der Abschluß des Formhohlraumes 41 nach vorn hin ist in der Zeichnung nicht dargestellt.

In Fig. 2 sind in vergrößerter Form unterschiedliche Ausbildungen der rippenartigen Erhöhungen 22, 23, 24, 25, 26, 27, 28 der Stützhülse 2 in Einzelabschnitten dargestellt.

Fig. 2a zeigt die rippenartigen Erhöhungen 22, 23 mit ihrem Rastwinkel von 45° und dem Einschubwinkel von 15°.

Fig. 2b zeigt die rippenartigen Erhöhungen 24, 26, 27, 28 mit ihrem Rastwinkel von 45° und ihrem Einschubwinkel von 20°. Die gezeigte Rippe ist nahezu doppelt so hoch dargestellt wie in Fig. 2a, um die beschriebenen Dichtwirkungen zu erzielen.

Fig. 2c zeigt die Rippe 25 gegenüber dem Abschluß des Formhohlraumes 41, mit zwei Flankenwinkeln von 45°. Diese Ausbildung ist wegen der besonderen Dichtungsprobleme am Ende des Formhohlraumes zweckmäßig.

Die rippenartigen Erhöhungen 26, 27, 28 können ebenfalls in Form der Fig. 2c ausgebildet sein.

In Fig. 1 ist die Stützhülse mit einem axialen Schlitz 29 gezeigt. Es können mehrere solcher Schlitze 29 über die Höhe der Stützhülse 2 eingebracht werden, wenn die Flexibilität der Stützhülse 2 gesteigert werden soll.

Wesentlich ist, daß die Schlitze vor der letzten Umfangsrippe 22 enden, um die Festigkeit der Stützhülse 2 zu gewährleisten. Auf die Einbringung der Schlitze 29 kann auch verzichtet werden.

**Patentanspruch**

Verfahren zur Herstellung eines Steckanschlusses für Wellschläuche unter Verwendung einer der lichten Weite des Schlauches entsprechenden Stützhülse (2), welche in das anzuschließende Schlauchende eingeschoben wird, wobei die Stützhülse an ihrem dem Schlauchende zugeordneten Endbereich einen über die lichte Weite des Schlauches vorstehenden Umfangsrand (21) aufweist, dadurch gekennzeichnet, daß die Stützhülse äußere Umfangsrippen aufweist, in ihrer Länge auf den Einführungsabschnitt eines Innendornes (1) aufgeschoben und in dieser Stellung in ihren Endsitz in dem abzustützenden Schlauchende gebracht wird, daß danach durch Zufahren einer teilbaren Außenform (4) zwischen dem abgestützten Schlauchende, dem aus der Stützhülse herausragenden Kopfbereich des Innendornes und den zugeordneten Teilen der Außenform ein umlaufender, die Form einer Ringmuffe bildender, geschlossener Aufnahmeraum geschaffen wird, und daß anschließend der Aufnahmeraum unter Beibehaltung der Wellungen des gewellten Schlauchendes bis auf den Grund der Wellentäler mit einem Kunststoffmaterial ausgespritzt wird.

**Claim**

Process for the manufacture of a plug connector for corrugated hoses employing a supporting sleeve (2) which corresponds to the inside diameter of the hose and is inserted into the end of the connecting hose. The supporting sleeve has a collar (21) which projects over the inside diameter of the hose and is characterized by its outer ribs, pushed onto the entry section of the inner mandrel (1) and brought to its resting position in the hose to be supported. A separable outer shell (4) is then used to cover the supported hose end, the head of the mandrel protruding out of the ribbed sleeve and the associated parts of the outer shell to form a wrapround enclosure in the form of a circular sleeve. A plastic material is then injected into the interior of this enclosure and, while retaining the corrugations, into the troughs of the corrugated end section of the hose.

**Revendication**

Procédé de fabrication d'un raccord pour tuyaux annelés par l'utilisation d'un manchon de maintien (2), correspondant au diamètre intérieur du tuyau, qui est enfoncé dans l'extrémité du tuyau à raccorder et dont la partie terminale correspondante à l'extrémité du tuyau présente un bord périmétral (21) en saillie par rapport au diamètre intérieur du tuyau ; procédé caractérisé par le fait que le manchon de maintien présente des cannelures, qu'il est enfoncé, dans le sens de sa longueur, sur le tronçon d'introduction d'un mandrin intérieur (1) et qu'il est, dans cette configuration, amené dans sa position finale dans l'extrémité du tuyau à assujettir ; par le fait qu'ensuite un espace de réception fermé cylindrique en forme de manchon annulaire est créé par l'adjonction d'une forme externe, divisible, (4) entre l'extrémité assujettie du tuyau, la partie antérieure saillante du mandrin intérieur et les parties coordonnées de la forme externe ; et par le fait que finalement l'espace de réception est soumis, jusque dans le fond des cannelures, à une injection de matière plastique, tout en conservant les cannelures de l'extrémité cannelée du tuyau.

0 154 926

Fig. 1

Fig. 2

Fig. 2a

Fig. 2b

Fig 2c